# FASCICULE DE BREVET EUROPEEN

(11) **EP 0 324 673 B1**
(45) Date de publication et mention de la délivrance du brevet: **13.10.1993**
(21) Numéro de dépôt: 89400052.0
(22) Date de dépôt: 09.01.1989
(51) Int. Cl.: B01D 24/24

(54) **Procédé pour la fabrication de planchers pour filtres, et planchers ainsi réalisés**
Filterböden und Verfahren zu ihrer Herstellung
Filter bottom and process to its manufacture

(30) Priorité: 15.01.1988 FR 8800433
(43) Date de publication de la demande: 19.07.1989
(73) Titulaire: "DEGREMONT" Société dite:, F-92508 Rueil-Malmaison Cédex (FR)
(72) Inventeur: Gaudin,Marie Pierre, F-78500 Saint Germain en Laye (FR); Meindre,Daniel, F92500 Rueil Malmaison (FR); Savall,Vincent, F-78140 Velizy Villacoublay (FR)
(74) Mandataire: Armengaud Ainé, Charles

(56) Documents cités:
- AT-B- 48 331
- DE-B- 1 302 745
- DE-C- 696 980
- DE-C- 841 443
- FR-A- 2 450 626
- FR-A- 2 596 385
- US-A- 3 110 667
- US-A- 3 456 804

## Description

Certaines opérations de filtration sont réalisées sur des filtres, notamment des filtres à matériau filtrant granulaire, dont la structure, généralement en béton armé, comporte principalement un radier s'appuyant sur des voiles ou des murs périphériques et un plancher perforé supportant le matériau filtrant.

Ce plancher est perforé pour permettre le passage et l'écoulement du liquide, notamment l'eau, filtré par le matériau ainsi que le passage et la répartition des fluides de lavage. Pour cela, il comporte un nombre suffisamment important de réservations munies d'organes de récupération du liquide filtré et de répartition des fluides de lavage. De plus, ce plancher doit être conçu et réalisé de manière à supporter des efforts verticaux importants, alternativement descendants et ascendants. La structure du plancher doit donc comporter des éléments d'ancrage suffisants pour reprendre ces efforts alternés.

La présente invention concerne un procédé de réalisation du plancher de ces filtres.

Les techniques de réalisation de ces planchers utilisées jusqu'à présent peuvent être schématisées de la façon suivante :
L'une de ces techniques consiste en l'association de dalles préfabriquées de petite dimension. Ces dalles préfabriquées en usine ou sur site sont mises en place et reliées aux appuis et entre elles par un système de plaques et de boulons servant d'ancrage. Un joint est ensuite réalisé entre chacune d'elles et à la périphérie du filtre pour assurer l'étanchéité.

Ce système de plaques, tiges de scellement et boulons met en jeu un procédé de fixation coûteux, mécaniquement peu satisfaisant et difficile à mettre en oeuvre. De plus, le joint, délicat à réaliser, nécessite une main-d'oeuvre spécialisée et exige une excellente qualité d'exécution.

Une autre technique consiste à réaliser certains planchers par coulage d'une dalle de béton armé sur un coffrage en matière plastique, dit coffrage perdu, mis en place au préalable sur les appuis du filtre.

En raison des efforts auxquels il est soumis, ce plancher nécessite, soit une grande épaisseur mais il est alors indispensable d'étayer le coffrage, qui a une résistance mécanique très réduite, avec un système compliqué, donc coûteux, d'étayage, soit un système d'appuis très rapprochés, avec de très faibles portées entre appuis, très coûteux lui aussi.

Le procédé suivant l'invention telle que définie dans la revendication 1 élimine ces inconvénients et permet l'exécution d'un plancher continu susceptible de présenter une faible épaisseur et de grandes portées entre appuis.

Cette invention a donc pour objet un procédé pour la fabrication de planchers pour filtres, notamment pour filtres à matériau filtrant granulaire, qui comporte les deux phases suivantes:
- Une première phase dans laquelle on réalise, par coulage de béton, au moins un élément porteur, auto-portant, ou prédalle, composé d'un élément mixte constitué d'un béton coulé et d'un coffrage perdu, ledit élément porteur présentant des réserves dans lesquelles sont logés les moyens, tels que buselures, pour l'introduction de fluides servant au lavage du filtre;
- une seconde phase dans laquelle l'élément ou les éléments, porteur auto-portants étant mis en place sur les supports du filtre, on coule en une seule fois sur cet élément ou ces éléments, du béton en quantité suffisante pour atteindre l'épaisseur totale souhaitée du plancher et réaliser ainsi une dalle qui recevra le matériau granulaire du filtre, des moyens étant prévus pour assurer la liaison de ladite dalle et dudit ou desdits éléments porteurs auto-portants.

Ainsi le procédé suivant l'invention est caractérisé essentiellement en ce qu'il comporte les deux phases.

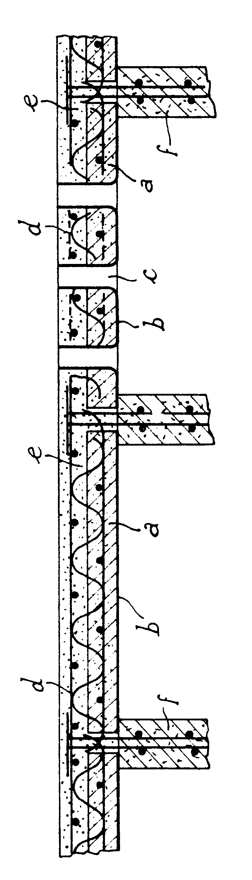

Dans une première phase, on réalise, comme le montre la figure unique du dessin annexé, qui est une vue partielle en coupe d'un plancher suivant l'invention, un élément mixte porteur, auto-portant, ou prédalle, constitué d'un béton coulé a et d'un coffrage perdu b, présentant des réserves c, ou réservation (c'est-à-dire une disposition pratique mise en place au coulage ou au montage facilitant la réalisation ultérieurement de trou pour le passage de canalisations), destinées à la mise en place dans le plancher de moyens, tels que buselures (non représentées), pour l'introduction dans le filtre de l'air et de l'eau servant à son lavage.

L'épaisseur de la prédalle est inférieure ou égale à la moitié de l'épaisseur totale que doit présenter le plancher une fois construit.

On a pris soin de faire comporter, suivant un mode de réalisation préféré de l'invention, à l'élément ou aux éléments, constituant la ou les prédalles un ferraillage d destiné à la liaison avec la dalle e réalisée dans la seconde phase du procédé.

Une autre technique pour assurer la liaison entre les prédalles et la dalle e consiste à appliquer un produit de collage en surface des prédalles avant coulage du béton de la dalle e.

L'élément coulé qui deviendra la prédalle ayant atteint un stade de prise adéquat est mis en place avec son coffrage perdu sur les appuis f du filtre.

La seconde phase du procédé consiste à couler en une seule fois sur la prédalle du béton en quantité suffisante pour constituer la dalle e proprement dite et atteindre l'épaisseur désirée du plancher.

De ce qui précede, il résulte que, conformément à l'invention, on associe en parfaite combinaison, deux techniques : utilisation de coffrage perdu et coulage d'un béton armé en deux phases, ce qui procure une grande souplesse et une grande simplicité d'exécution.

Les avantages présentés par le procédé suivant l'invention sont, en particulier, les suivants :
L'élément mixte porteur auto-portant, participant à la résistance mécanique de l'ensemble de la structure, autorise, même pour les faibles épaisseurs de plancher couramment pratiquées, de grandes portées entre appuis sans nécessiter de recourir à un étayage.

L'étanchéité du plancher constitué suivant l'invention, est assurée par la continuité du béton de la dalle réalisée dans la dernière phase du procédé, l'étanchéité vis-à-vis des murs périphériques étant assurée par un moyen connu tel que joint, cordon d'étanchéité ou encastrement. A l'aide d'un seul joint périphérique, il est possible de remédier aux déformations différentielles du plancher par rapport à ses appuis.

Exemple : pour un filtre de 18 m² de superficie, une technique classique de réalisation d'un plancher de filtre de 0,10 m d'épaisseur soumis aux efforts de filtration et de lavage consiste à associer trente cinq dalles en béton armé préfabriquées de dimension 82 x 0,60 x 0,10. Ces dalles sont posées sur huit appuis (six poutres intermédiaires plus deux banquettes, appuis de rive) elles sont liaisonnées entre elles et à l'appui par l'intermédiaire de tiges d'ancrage boulonnées sur plaque. L'étanchéité de l'ensemble est assurée par la réalisation et la pose d'un joint autour de chaque dalle ainsi qu'à la périphérie du filtre.

Le procédé suivant l'invention permet, pour une même superficie, de réaliser un plancher de même épaisseur avec seulement cinq appuis (trois poutres intermédiaires plus deux appuis de rive) dont la portée entr'axe sera égale à 1,30 m et un unique joint d'étanchéité sur le périmètre du filtre. Ce plancher de 0,10 m d'épaisseur totale sera constitué de quatre prédalles en béton armé de 0,05 m d'épaisseur, de dimension 1,25 x 3,45 sur lesquelles est coulée en seconde phase une dalle de 0,05 m d'épaisseur. Le coffrage perdu des prédalles a pour dimension 1,25 x 0,50 (plusieurs éléments pouvant être accolés pour réaliser une prédalle). Il est pourvu d'un nombre nécessaire de réservations pour les organes de récupération d'eau filtrée et de répartition de l'eau et de l'air de lavage, soit par exemple cinquante par mètre carré de surface du filtre.

## Revendications

1. Procédé pour la fabrication de planchers pour filtres, notamment pour filtres à matériau filtrant granulaire, caractérisé en ce qu'il comporte les deux phases suivantes:
- une première phase dans laquelle on réalise, par coulage de béton, au moins un élément porteur, auto-portant, ou prédalle, composé d'un élément mixte constitué d'un béton coulé (a)/et d'un coffrage perdu (b), ledit élément porteur dont l'épaisseur est inférieure ou égale à la moitié de l'épaisseur totale du plancher définitif présentant des réserves (c) destinées à recevoir les moyens, tels que buselures, pour l'introduction de fluides servant au lavage du filtre;
- une seconde phase dans laquelle l'élément ou les éléments, porteurs auto-portants étant mis en place sur les supports (f) du filtre, on coule en une seule fois sur cet élément ou ces éléments, du béton en quantité suffisante pour atteindre l'épaisseur totale souhaitée du plancher et réaliser ainsi une dalle (e) qui recevra le matériau filtrant, des moyens étant prévus pour assurer la liaison de ladite dalle et dudit ou desdits éléments porteurs auto-portants.

2. Procédé suivant la revendication 1, caractérisé en ce que la liaison entre l'élément porteur auto-portant et la dalle (e) est réalisée par un ferraillage (d) prévu sur ledit élément auto-portant.

3. Procédé suivant la revendication 1, caractérisé en ce que la liaison entre l'élément porteur auto-portant et la dalle (e) est réalisée par application d'un produit de collage sur la surface dudit élément avant coulage du béton de la dalle.

4. Plancher pour filtre, notamment pour filtre à matériau filtrant granulaire, obtenu conformément au procédé suivant l'une quelconque des revendications précédentes.

## Claims

1. Method of production of filter floors, notably for filters having granular filtration material, characterized in that the method comprises the following two phases:
- a first phase, in which at least one self-supporting, load-bearing element or pre-slab is constructed by casting concrete, this element being a mixed element composed of a cast concrete (a) and of a lost formwork (b), said load-bearing element, the thickness of which is less than or equal to one-half of the total thickness of the final floor, having reserves (c) intended for receiving means, such as bushings, for the introduction of fluids serving for washing the filter;
- a second phase, in which the self-supporting, load-bearing element or elements being placed on the supports (f) of the filter, concrete is cast in a single operation onto this element or these elements in a quantity sufficient for reaching the desired total thickness of the floor and thus creating a slab (e) which will receive the filtration material, means being provided for ensuring the connection between said slab and said self-supporting, load-bearing element or elements.

2. Method according to Claim 1, characterized in that the connection between the self-supporting, load-bearing element and the slab (e) is created by reinforcement (d) provided on said self-supporting element.

3. Method according to Claim 1, characterized in that the connection between the self-supporting, load-bearing element and the slab (e) is created by application of an adhesive product onto the surface of said element before the concrete of the slab is cast.

4. Filter floor, notably for a filter having granular filtration material, produced by the method according to any one of the preceding Claims.

## Patentansprüche

1. Verfahren zur Herstellung von Filterböden, insbesondere für Filter mit granularem Filtermaterial,
**gekennzeichnet** durch
folgende zwei Verfahrensschritte:
- einen ersten Verfahrensschritt, bei dem durch Betonschüttung mindestens ein selbsttragendes Trägerelement oder ein vorgefertigtes Plattenelement hergestellt wird, das aus einem Mischelement, bestehend aus vergossenem Beton (a), und einer verlorenen Schalung zusammengesetzt ist, wobei das Trägerelement, dessen Dicke kleiner oder gleich der mittleren Gesamtdicke des endgültigen Bodens ist, Aussparungen (c) zur Aufnahme von Mitteln, wie z.B. Düsen, zur Einführung von Fluiden zur Spülung des Filters aufweist;
- einen zweiten Verfahrensschritt, bei dem das selbsttragende Trägerelement bzw. die selbsttragenden Trägerelemente, die auf die Stützträger (f) des Filters aufgelegt sind, ein einziges Mal mit Beton übergossen werden, wobei die Menge des Betons ausreichend ist, um die gewünschte Gesamtdicke des Bodens zu erzielen und so eine Platte (e) zu erhalten, die das Filtermaterial aufnimmt, und wobei Mittel zur Herstellung einer sicheren Verbindung der Platte mit den selbsttragenden Trägerelementen vorgesehen sind.

2. Verfahren nach Anspruch 1,
dadurch **gekennzeichnet,**
daß die Verbindung zwischen dem selbsttragenden Trägerelement und der Platte (e) durch eine Armierung (d) auf dem selbsttragenden Element erreicht wird.

3. Verfahren nach Anspruch 1,
dadurch **gekennzeichnet,**
daß die Verbindung zwischen dem selbsttragenden Trägerelement und der Platte (e) durch den Auftrag eines Klebers auf die Oberfläche des Elements vor dem Vergiessen des Betons der Platte erreicht wird.

4. Filterboden, insbesondere für Filter mit granularem Filtermaterial, erhalten nach dem Verfahren gemäß einem der vorstehenden Ansprüche.
